(19) Europäisches Patentamt
European Patent Office
Office européen des brevets

(11) **EP 2 407 985 A2**

(12) **EUROPEAN PATENT APPLICATION**

(43) Date of publication:
**18.01.2012 Bulletin 2012/03**

(51) Int Cl.:
***H01G 9/20*** *(2006.01)*

(21) Application number: **11165737.5**

(22) Date of filing: **11.05.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **16.07.2010 KR 20100069175**<br><br>(71) Applicant: **Samsung SDI Co., Ltd.**<br>**Yongin-si, Gyeonggi-do (KR)**<br><br>(72) Inventors:<br>• **KIM, Hyun-Chul**<br>**Gyeonggi-do (KR)** | • **PARK, Jung-Tae**<br>**Gyeonggi-do (KR)**<br>• **LEE, Jong-Ki**<br>**Gyeonggi-do (KR)**<br>• **YANG, Nam-Choul**<br>**Gyeonggi-do (KR)**<br><br>(74) Representative: **Walaski, Jan Filip**<br>**Venner Shipley LLP**<br>**20 Little Britain**<br>**London**<br>**EC1A 7DH (GB)** |

(54) **Dye-Sensitized Solar Cell**

(57) A dye-sensitized solar cell is disclosed. The dye-sensitized solar cell may include a first substrate and a second substrate positioned to face each other and a plurality of unit cells arranged between the first substrate and the second substrate. Each of the unit cells may include first and second conductive transparent electrodes formed on internal surfaces of the first substrate and the second substrate, respectively. The dye-sensitized solar cell may include a first electrode formed on the first conductive transparent electrode and including an oxide semiconductor layer in which a dye is absorbed and a second electrode positioned on the second conductive transparent electrode opposite to the first electrode. The dye-sensitized solar cell may also include an electrolyte disposed between the first electrode and the second electrode. The second electrode may include one or more openings.

FIG. 2

EP 2 407 985 A2

**Description**

The present disclosure relates to a solar cell, and more particularly, to a dye-sensitized solar cell.

Photoelectric conversion elements that convert light energy into electric energy have been studied as a source of energy to replace fossil fuels. Solar cells, in particular, have attracted much attention as such alternative energy sources. Solar cells have various driving principles. For example, wafer type silicon solar cells or crystalline solar cells use a semiconductor p-n junction. However, solar cells formed of a high purity semiconductor material have a high manufacturing cost.

Unlike silicon solar cells, dye-sensitized solar cells have a photosensitive dye. Light striking the photosensitive dye generates excited electrons, which pass to a semiconductor material. The dye-sensitized solar cells also include an electrolyte electrically connected to an external circuit. When compared to a conventional solar cell, dye-sensitized solar cells have a much higher photoelectric conversion efficiency. Thus, dye-sensitized solar cells are considered to be next generation solar cells.

In one aspect, a dye-sensitized solar cell having an increased light use efficiency and an improved short circuit current by increasing an aperture ratio of an electrode is provided.

In another aspect, a dye-sensitized solar cell includes, for example, a first substrate and a second substrate formed facing each other and a plurality of unit cells arranged between the first substrate and the second substrate.

In some embodiments, each of the unit cells includes first and second conductive transparent electrodes positioned on internal surfaces of the first substrate and the second substrate, respectively. In some embodiments, the dye-sensitized solar cell includes a first electrode formed on the first conductive transparent electrode and including an oxide semiconductor layer including, for example, an absorbed dye. In some embodiments, the dye-sensitized solar cell includes a second electrode that positioned on the second conductive transparent electrode opposite to the first electrode. In some embodiments, the dye-sensitized solar cell includes an electrolyte disposed between the first electrode and the second electrode. In some embodiments, the second electrode includes an opening.

In some embodiments, an aperture ratio of the second electrode is equal to or less than about 50%. In some embodiments, a width of the second electrode is equal to or less than about 500μm. In some embodiments, the plurality of unit cells is electrically connected in series, and wherein adjacent unit cells are separated from each other by a sealing material. In some embodiments, first polarities and second polarities of the plurality of unit cells are alternately arranged with respect to the first substrate. In some embodiments, the dye-sensitized solar cell further includes a connection electrode for electrically connecting the first conductive transparent electrode of one unit cell and the second conductive transparent electrode of an adjacent unit cell. In some embodiments, the sealing material extends from the connection electrode to the first substrate or the second substrate positioned opposite to the connection electrode. In some embodiments, the sealing material includes an insulating material. In some embodiments, the dye-sensitized solar cell further includes a connection electrode configured to electrically connect the first conductive transparent electrode of one unit cell and the second conductive transparent electrode of an adjacent unit cell. In some embodiments, the plurality of unit cells is arranged with respect to the first substrate so as to face the same direction. In some embodiments, the dye-sensitized solar cell further includes an insulating material covering the connection electrode. In some embodiments, the dye-sensitized solar cell further includes a sealing body disposed to cover the connection electrode. In some embodiments, the dye-sensitized solar cell further includes a UV blocking layer on an external surface of the first substrate or the second substrate and corresponding to the second electrode. In some embodiments, the UV blocking layer includes, for example, a partially transparent material. In some embodiments, the second electrode includes a carbon nanotube layer.

Embodiments of the invention will now be described by way of example with reference to the accompanying drawings:

FIG. 1 is a schematic exploded perspective view illustrating a dye-sensitized solar cell, according to an embodiment of the present invention.

FIG. 2 is a schematic partial cross-sectional view illustrating the dye-sensitized solar cell taken along a line II-II of FIG. 1.

FIG. 3 is a plane view illustrating a second electrode of FIG. 2.

FIG. 4 is a plane view illustrating a second electrode including latticed openings, according to another embodiment.

FIG. 5 is a graph illustrating light transmittances of a second electrode according to a wavelength band of light, according to an embodiment.

FIG. 6 is a schematic partial cross-sectional view illustrating a dye-sensitized solar cell, according to another embodiment.

FIG. 7 is a schematic partial cross-sectional view illustrating a dye-sensitized solar cell, according to another embodiment.

FIG. 8 is a schematic partial cross-sectional view illustrating a dye-sensitized solar cell, according to another embodiment.

FIG. 9 is a schematic cross-sectional view illustrating a dye-sensitized solar cell, according to another embodiment.

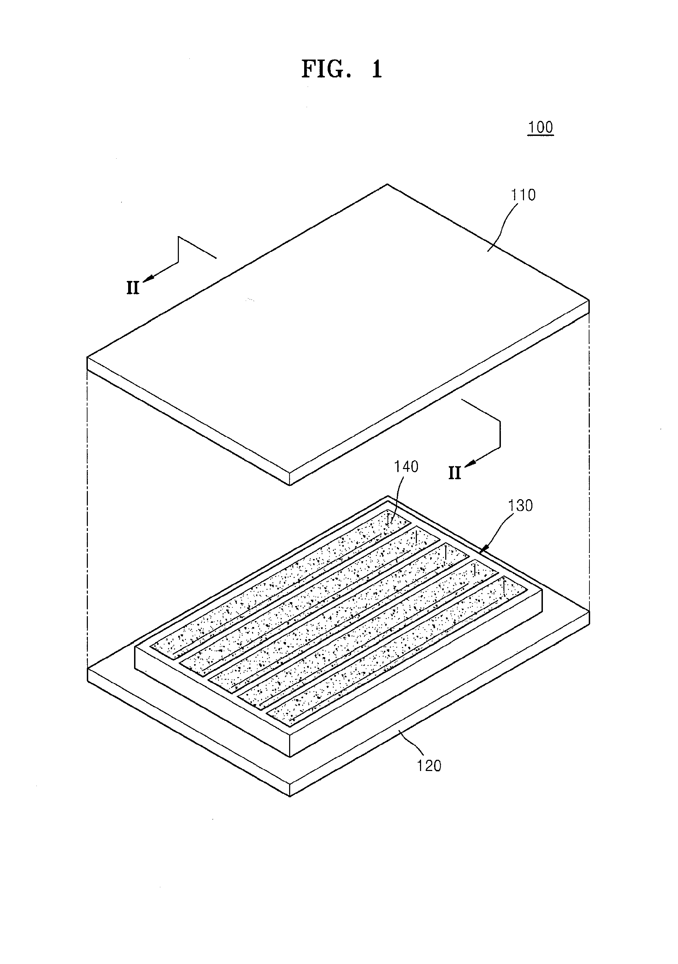

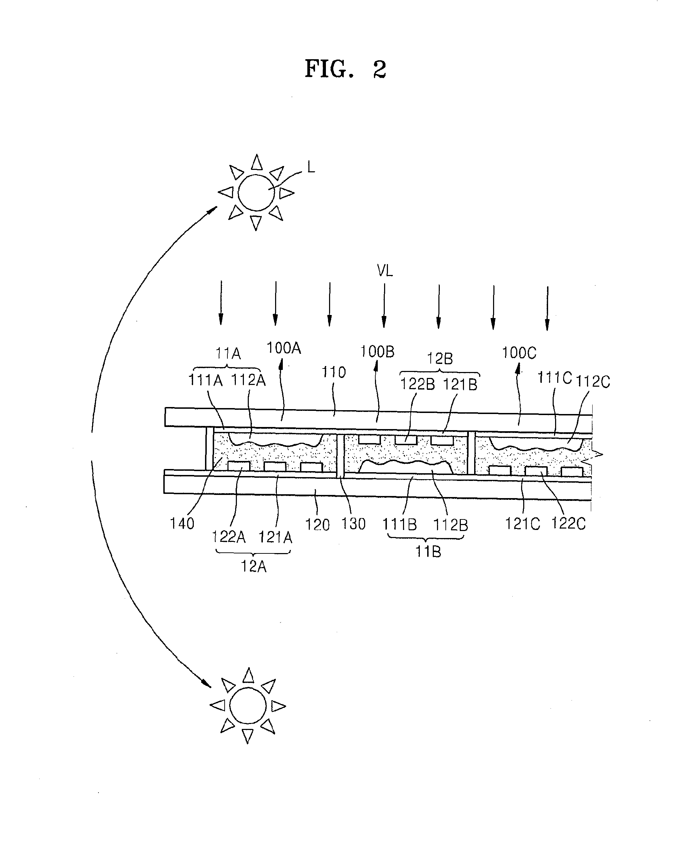

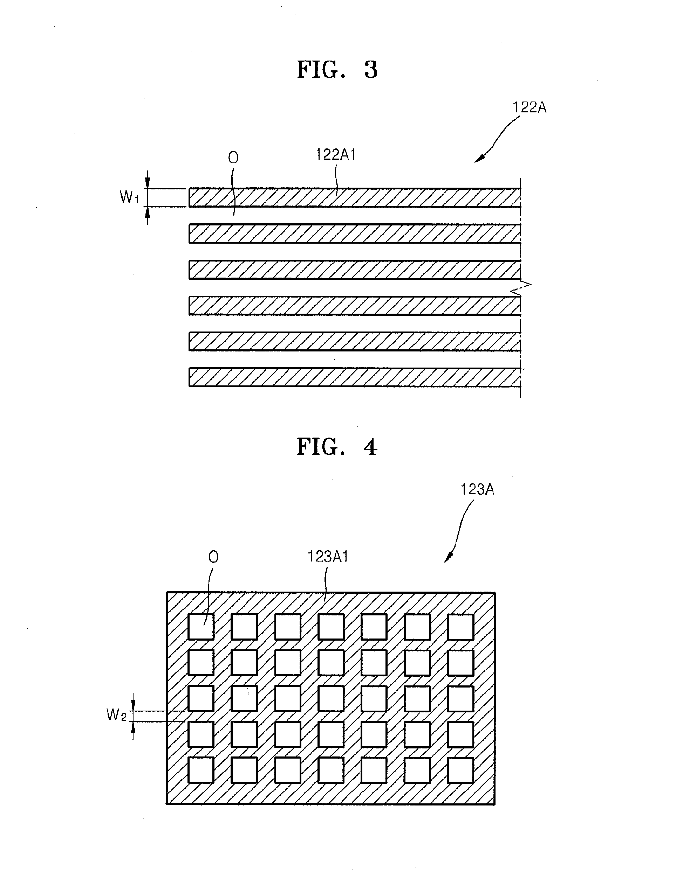

FIG. 1 is a schematic exploded perspective view illustrating a dye-sensitized solar cell 100, according to one embodiment of the present invention. FIG. 2 is a schematic partial cross-sectional view illustrating the dye-sensitized solar cell 100 taken along a line II-II of FIG. 1. FIG. 3 is a plane view illustrating a second electrode 122A of FIG. 2.

Referring to FIG. 1 and FIG. 2, the dye-sensitized solar cell 100 includes a first substrate 110, a second substrate 120, a sealing material 130, a plurality of electrolytes 140 and first, second, and third unit cells 100A, 100B, and 100C. Hereinafter, the first unit cell 100A and the second unit cell 100B adjacent to the first unit cell 100A will be described for convenience of description. However, the number and structural arrangement of unit cells 100A, 100B, and 100C are not limited thereto.

Referring to FIG. 1, the first substrate 110 and the second substrate 120 may have an approximately rectangular shape, but the present invention is not limited thereto. The first substrate 110 may be disposed at a first side of the second substrate 120. The second substrate 120 may be formed of the same material as the first substrate 110. The first substrate 110 or the second substrate 120 may be formed of a material having a high light transmittance, for example, a transparent material. That is, the first substrate 110 or the second substrate 120 may be formed of a glass substrate or a resin film. Since a resin film is usually flexible, a resin film is usefully used when flexibility is required.

In FIG. 2, the first substrate 110 and the second substrate 120 face each other, and the first and second unit cells 100A and 100B are disposed between the first substrate 110 and the second substrate 120. In some embodiments, the first and second unit cells 100A and 100B may be separated from each other by the sealing material 130. As illustrated in FIG. 2, the first substrate 110 and the second substrate 120 may alternately receive light VL according to movement of a light emitting source L. The light emitting source L may include light emitted from the sun.

The first and second unit cells 100A and 100B may include a plurality of functional layers 11A, 11B, 12A, and 12B for performing photoelectric conversion, and a plurality of electrolytes 140. For example, the first unit cell 100A may include the functional layer 11A as a first functional layer and the functional layer 12A as a second functional layer. In this regard, the first functional layer 11A may include a first conductive transparent electrode 111A and a first electrode 112A. The second functional layer 12A may include a second conductive transparent electrode 121A and a second electrode 122A. The second unit cell 100B may be disposed adjacent to the first unit cell 100A.

With respect to the first functional layer 11A, the first electrode 112A may include an oxide semiconductor layer (not shown) having a photosensitive dye. The photosensitive dye is configured to absorb the light VL and excite electrons. The first conductive transparent electrode 111A functions as a negative electrode of the dye-sensitized solar cell 100 and as a current path by receiving electrons generated due to photoelectric conversion. The light VL incident on the first conductive transparent electrode 111A functions as an excitation source of the photosensitive dye adsorbed on the oxide semiconductor layer. The first conductive transparent electrode 111A may be formed of a transparent conducting oxide (TCO) that is electrically conductive, for example, an indium tin oxide (ITO), a fluorine-doped tin oxide (FTO), or an antimony-doped tin oxide (ATO). The first conductive transparent electrode 111A may further include a metal electrode formed of, for example, gold (Au), silver (Ag), or aluminum (Al). The metal electrode, which is used to decrease electric resistance of the first conductive transparent electrode 111A, may be formed in a stripe pattern or a mesh pattern.

As mentioned above, the first electrode 112A may comprise an oxide semiconductor layer. The oxide semiconductor layer may include a semiconductor material in the dye-sensitized solar cell 100 and/or a semiconductor material having a metal oxide. The metal oxide may include, for example, an oxide of cadmium (Cd), zinc (Zn), indium (In), lead (Pb), molybdenum (Mo), tungsten (W), antimony (Sb), titanium (Ti), Ag, manganese (Mn), tin (Sn), zirconium (Zr), strontium (Sr), gallium (Ga), silicon (Si), or chromium (Cr). The photosensitive dye is adsorbed on the oxide semiconductor layer to increase a photoelectric conversion efficiency of the dye-sensitized solar cell 100. For example, the oxide semiconductor layer may be formed by coating a paste in which are dispersed semiconductor particles having a size of about 5 nm to about 1000 nm onto the first substrate 110 on which electrodes are formed, and then applying predetermined amounts of heat and pressure thereto.

When the light VL passes through the first substrate 110 or the second substrate 120 and is absorbed by the photosensitive dye, electrons in the photosensitive dye are excited from a ground state into an excited state. The excited electrons are transmitted to a conduction band of the oxide semiconductor layer through an electrical coupling between the photosensitive dye and the oxide semiconductor layer. The electrons are then transferred to the first conductive transparent electrode 111A via the oxide semiconductor layer. Then the electrons are discharged out of the dye-sensitive solar cell 100 through the first conductive transparent electrode 111A, and thus form a driving current for driving an external circuit.

The photosensitive dye may be configured to absorb visible light. The photosensitive dye may be formed of molecules that rapidly transfer electrons in an excited state to the first electrode 112A. The photosensitive dye may be a liquid type, a semi-solid gel type, and/or a solid type. For example, the photosensitive dye may include a ruthenium-based photosensitive dye.

The electrolyte 140 filled in the first and second unit cells 100A and 100B may be reduction-oxidation electrolytes including an oxidant and reductant pair. The type of the electrolytes 140 may be a solid type, a gel type, a liquid type, or the like.

The second functional layer 12A includes the second conductive transparent electrode 121A and the second electrode 122A. The second conductive transparent electrode 121A may function as a positive electrode of the dye-sensitized solar cell 100. Electrons in the photosensitive dye adsorbed onto the first electrode 112A are excited by absorbing the light VL, and the excited electrons are discharged out of the dye-sensitized solar cell 100 through the first conductive transparent electrode 111A. Meanwhile, having lost electrons through the first conductive transparent electrode 111A, the photosensitive dye is reduced by receiving electrons provided due to oxidation of the electrolytes 140. The oxidized electrolytes 140 are reduced by electrons that have passed through an external circuit and reached the second conductive transparent electrode 121A, thereby completing the circuit and the photoelectric conversion process.

Similar to the first conductive transparent electrode 111A, the second conductive transparent electrode 121A may be formed of an electrically conductive TCO. In addition, the second conductive transparent electrode 121A may further include a metal electrode to have a high electrical conductivity. The metal electrode may be formed of, for example, Ag, Au, or Al. The second electrode 122A may be formed on the second conductive transparent electrode 121A. The second electrode 122A may be formed of a material configured for providing electrons and performing a reduction catalyst function. For example, the second electrode 122A may be formed of a metal such as Pt, Au, Ag, Al, or the like, a metal oxide such as a tin oxide, or a carbon-based material such as graphite. Alternatively, the second electrode 122A may be formed of a carbon nanotube sheet.

When the light VL may be incident on both substrates of the dye-sensitized solar cell 100, if the second electrode 122A is formed as a solid film block, and if the light emitting source L moves toward the second substrate 120 as illustrated in FIG. 2, the photoelectric conversion efficiency of the dye-sensitized solar cell 100 may be decreased due to a decrease in the amount of the light VL incident on the first unit cell 100a. For example, the position of the sun with respect to the dye-sensitized solar cell 100 may be changed due to the diurnal motion of the sun, or when the dye-sensitized solar cell 100 is turned over, the amount of the light VL incident on the dye-sensitized solar cell 100 may be decreased.

Referring to FIG. 3, the second electrode 122A may include a plurality of patterns 122A1 each having a first line width W1 and extending in a stripe shape. Differently stated, the second electrode 122A is patterned to provide a stripe pattern. A plurality of openings O are formed between the patterns 122A1. The size of the first line width W1 and the size of the openings O affect the light transmittance and the photoelectric conversion efficiency of the dye-sensitized solar cell 100.

Referring to FIG. 2 and FIG. 3, the light VL may pass through the openings O formed in the second electrode 122A. Thus, when the light emitting source L moves toward the second substrate 120 with respect to the first unit cell 100A, the amount of the light VL incident on the first unit cell 100A through the openings O may be increased.

Variations in the light transmittance and the photoelectric conversion efficiency of the dye-sensitized solar cell 100 according to variations in the size of the first line width W1 of the patterns 122A1 and in an aperture ratio corresponding to the size of the openings O will be described with reference to Table 1. In this regard, the aperture ratio is a ratio of the size (area) of the openings O with respect to the entire size (area) of the second electrode 122A. In Table 1, Comparative Example corresponds to a case in which no pattern is formed in the second electrode 122a, that is, a case in which the aperture ratio of the second electrode 122a is 0%. Embodiments 1 through 5 correspond to cases in which the patterns 122A1 are included in the second electrode 122A, wherein the first line width W1 and the aperture ratio have different values in each of the embodiments. Embodiment 6 is a second electrode 123A illustrated in FIG. 4 in which a plurality of grid patterned openings are formed, wherein the second electrode 123A has a second line width W2 of 1mm and an aperture ratio of 50%. Patterns 123A1 are formed in the second electrode 123A together with openings O.

TABLE 1

| | Comparative Example | Embodiment 1 | Embodiment 2 | Embodiment 3 | Embodiment 4 | Embodiment 5 | Embodiment 6 |
|---|---|---|---|---|---|---|---|
| Aperture ratio (%) | 0 | 50 | 60 | 70 | 50 | 50 | 50 |
| First line width (mm) | - | 0.5 | 0.5 | 0.5 | 1 | 2 | Grid pattern (1 mm) |

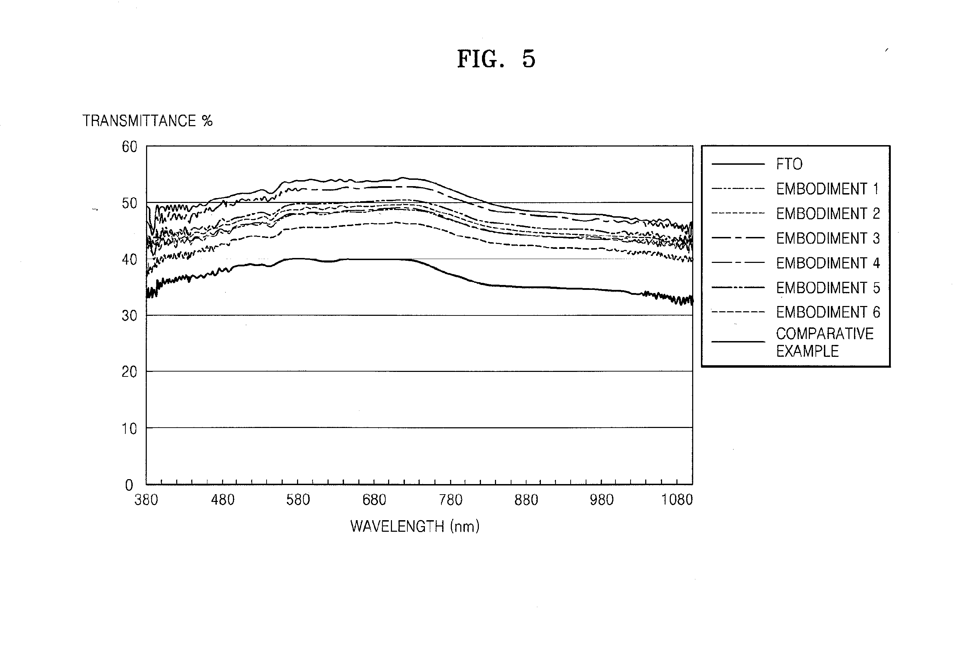

FIG. 5 is a graph illustrating light transmittances of the second electrode 122A according to a wavelength band of light in the Comparative Example and Embodiments 1 through 6. FIG. 5 illustrates the transmittance of a fluorine-doped tin oxide (FTO) transparent electrode according to the wavelength band of light. FIG. 5 thus compares the transmittance of the FTO transparent electrode with the light transmittances of the second electrode 122A of Embodiments 1 through 6. In this regard, the FTO transparent electrode is a rectangular electrode in which no pattern is formed.

In contrast, Embodiments 1 through 6, in which patterns are formed in the second electrode 122A, show high light transmittances in the entire wavelength band compared to the Comparative Example. In addition, from among Embodiments 1 through 6, Embodiment 3 (having the highest aperture ratio of 70%) shows the highest light transmittance. This shows a correlation between the light transmittance and the aperture ratio. Thus, to obtain a relatively high light transmittance, the aperture ratio may be relatively large. However, when the aperture ratio is relatively large, the size of the openings O between the patterns 122A1 of the second electrode 122A is also relatively large. When the size of the openings O between the patterns 122A1 of the second electrode 122A are relatively large, the concentration gradients of oxidized electrolyte ions are increased, thereby decreasing an overall photoelectric conversion efficiency of the dye-sensitized solar cell 100. Accordingly, to maintain the light transmittance and photoelectric conversion efficiency of the dye-sensitized solar cell 100 at proper levels, the aperture ratio and the first line width W1 of the second electrode 122A may be modified.

Table 2 shows reduction of the electrolytes 140 performed by the second electrode 122A. In this case, light was emitted only onto an active area by applying a mask (W/M, with a mask) on front and rear surfaces. As shown in Table 2, when efficiencies of the front and rear surfaces are considered, Embodiment 1 exhibits the highest efficiency. Here, referring to FIG. 2, the front surface may be the first substrate 110 and the rear surface may be the second substrate 120.

TABLE 2

| | Front surface/ Reat surface | Type of TiO2 | Thickness of TiO2 | Efficiency (%) | Voc. (V) | $J_{sc}$ (mA/cm$^2$) | FF |
|---|---|---|---|---|---|---|---|
| Embodiment 1 | Front surface (W/M) | | | 6.1 | 0.739 | 12.95 | 64.8 |
| | Rear surface (W/M) | | | 4.5 | 0.738 | 8.78 | 64.9 |
| Embodiment 2 | Front surface (W/M) | | | 3.5 | 0.727 | 8.19 | 58.6 |
| | Rear surface (W/M) | | | 2.9 | 0.731 | 6.93 | 57.0 |
| Embodiment 3 | Front surface (W/M) | | | 2.8 | 0.739 | 6.3 | 60.0 |
| | Rear surface (W/M) | | | 2.3 | 0.743 | 5.3 | 57.7 |
| Embodiment 4 | Front surface (W/M) | | | 4.6 | 0.732 | 10.3 | 61.4 |
| | Rear surface (W/M) | | | 3.6 | 0.735 | 8.2 | 60.6 |

(continued)

|  | Front surface/ Reat surface | Type of TiO2 | Thickness of TiO2 | Efficiency (%) | Voc. (V) | $J_{sc}$ (mA/cm$^2$) | FF |
|---|---|---|---|---|---|---|---|
| Embodiment 5 | Front surface (W/M) | ENB | 25.5 μm | 3.8 | 0.737 | 9.5 | 53.8 |
| | Rear surface (W/M) | | | 3.0 | 0.745 | 7.6 | 53.4 |
| Embodiment 6 | Front surface (W/M) | | | 6.1 | 0.734 | 12.6 | 66.0 |
| | Rear surface (W/M) | | | 3.9 | 0.733 | 7.4 | 71.7 |
| Comparative Example | Front surface (W/M) | | | 6.4 | 0.737 | 12.45 | 69.7 |
| | Rear surface (W/M) | | | 4.1 | 0.736 | 7.55 | 74.3 |

In this regard, the efficiencies may be obtained by Equation 1. The efficiencies may be affected according to the cell temperature, a radiant intensity, and/or a spectral irradiance distribution. Experimental values were obtained when the radiant intensity is 1000W/m$^2$, the spectral irradiance distribution is AM 1.5 global (ASTM G173), and the cell temperature is 25°C. In this regard, Pin denotes an incident radiant intensity, FF denotes a fill factor, Jsc denotes a short circuit current density, and Voc denotes an open circuit voltage.

Equation 1

$$\text{Efficiency } (\%) = (FF \times V_{oc} \times J_{sc}) / P_{in}$$

As illustrated in FIG. 5 and Table 2, when the aperture ratio does not exceed about 50%, and the first line width does not exceed about 0.5mm, the short circuit current density and the photoelectric conversion efficiency are high. That is, although embodiments having high aperture ratios show high light transmittances as illustrated in FIG. 5, as the aperture ratio increases, the size of the openings O between the patterns 122A1 also increases, thereby generating a difference in the concentration gradients between the electrolyte ions for performing reduction reaction. That is, as the size of the openings O between the patterns 122A1 increases, the difference in the concentration gradients between the electrolyte ions increases. This increase in the difference in the concentration gradients between the electrolyte ions may gradually decrease the operation of the dye-sensitized solar cell 100 circuit by increasing the amount of ions oxidized in the electrolyte 140. Accordingly, the size of the openings O between the patterns 122A1 may not be increased only to increase light transmittance. Referring to Table 2, the photoelectric conversion efficiency of Embodiment 1 is the highest, and Embodiment 2 (aperture ratio of 60%) and Embodiment 3 (aperture ratio of 70%) have low photoelectric conversion efficiencies. This data shows that the photoelectric conversion efficiency may be improved when the aperture ratio is controlled to be less than or about 50%.

In addition, even when the aperture ratio is about 50%, the photoelectric conversion efficiency of Embodiment 1 is higher than that of Embodiment 5. That is, for the same aperture ratio, if the first line width W1 is relatively wide, the size of the openings O between the patterns 122A1 is relatively great, and thus the difference in the concentration gradients between the electrolyte ions is relatively great, thereby decreasing the photoelectric conversion efficiency of the dye-sensitized solar cell 100. Accordingly, the difference in the concentration gradients between the electrolyte ions may be reduced by maintaining the first line width W1 below a predetermined value.

The photoelectric conversion efficiency of Embodiment 1, in which the first line width is about 0.5 mm, is higher than that of Embodiment 5, in which the first line width is about 2 mm. Further, the photoelectric conversion efficiency of Embodiment 4 is higher than that of Embodiment 5, and thus the first line width W1 of the second electrode 122A may be less than about 0.5 mm.

When the openings O are formed in the second electrode 122A, an active area of the second electrode 122A may be reduced. Accordingly, the efficiencies of the front surfaces of Embodiments 1 through 6 may be less than that of the front surface of Comparative Example. However, the efficiencies of the rear surfaces of Embodiments 1 through 6 may be higher than that of Comparative Example due to the openings O formed in the second electrode 122A. Referring to Table 2, the efficiency of the rear surface of Embodiment 1, in which the first line width W1 is about 0.5 mm, may be greater than that of Comparative Example. Accordingly, when the first line width W1 is equal to or less than about 0.5 mm and the aperture ratio is equal to or less than about 50%, the photoelectric conversion efficiency is relatively high.

At this time, comparing Embodiment 1 and the Comparative Example, the efficiency of the front surface of Embodiment 1 (6.1%) is lower than that of the Comparative Example (6.4%), and the efficiency of the rear surface of Embodiment 1 (4.5%) is higher than that of Comparative Example (4.1%). In addition, in Embodiment 1, the short circuit current density of the rear surface is increased by about 14 %, compared to Comparative Example. As such, if the openings O are formed in the second electrode 122A and the first line width W1 and the aperture ratio are formed according to as described above, the efficiency of the front surface of Embodiment 1 may be maintained similar to that of the front surface of Comparative Example, in which the patterns 122A1 are not formed, and also the efficiency of the rear surface may be increased. Accordingly, when the dye-sensitized solar cell 100, on which light may be incident on both surfaces, includes the second electrode 122A in which the patterns 122A1 are formed, the efficiency of the rear surface may be increased. Thus, the structure having the openings on at least one side of the dye-sensitized solar cell 100 may be applicable to a W-shaped structure.

Referring again to FIG. 2, the dye-sensitized solar cell 100 includes the first and second unit cells 100A and 100B. In this embodiment, the first and second unit cells 100A and 100B, which are adjacent to each other, may be connected in parallel or in series. When the first and second unit cell 100A and 100B are connected in series, first polarities and second polarities of the first and second unit cells 100A and 100B may be alternately arranged. That is, when a negative electrode of the first unit cell 100A is disposed to face the first substrate 110, a positive electrode of the second unit cell 100B may be disposed to face the first substrate 110. In this embodiment, for example, the first conductive transparent electrode 111A of the first unit cell 100A and a second conductive transparent electrode 121B of the second unit cell 100B, disposed adjacent to each other, may be electrically connected to each other. In FIG. 2, for convenience of description, the reference number of the first and second conductive transparent electrodes 111A and 121B are separately illustrated. However, only one reference number may indicate the conductive transparent electrodes. In this embodiment, a positive electrode of the first unit cell 100A and a negative electrode of the second unit cell 100B may be separated from each other by the sealing material 130. The first and second unit cells 100A and 100B, which are electrically connected in series, may be alternately formed. That is, in FIG. 2, the negative electrode of the second unit cell 100B and a positive electrode of the third unit cell 100C may be electrically and/or mechanically connected to each other with respect to the second substrate 120 wherein the third unit cell 100C is the same as the first unit cell 100A. That is, the first conductive transparent electrode 111B disposed on the negative electrode of the second unit cell 100B may be electrically connected to a second conductive transparent electrode 121C disposed on the positive electrode of the third unit cell 100C, and thus the first conductive transparent electrode 111B and the second conductive transparent electrode 121C may be formed as one body.

In the W-shaped dye-sensitized solar cell 100, the light VL may be incident on opposite surfaces of the dye-sensitized solar cell 100, and thus the efficiency of the front surface and the efficiency of the rear surface become important. Accordingly, a W-shaped dye-sensitized solar cell module including the plurality of the first unit cells 100A and the second unit cells 100B has a rear surface having a high light transmittance and a high efficiency, wherein each of the first unit cells 100A includes the second electrode 122A, in which the aperture ratio does not exceed about 50% and the first line width W1 does not exceed about 0.5 mm. Thus, the W-shaped dye-sensitized solar cell module may be effectively used.

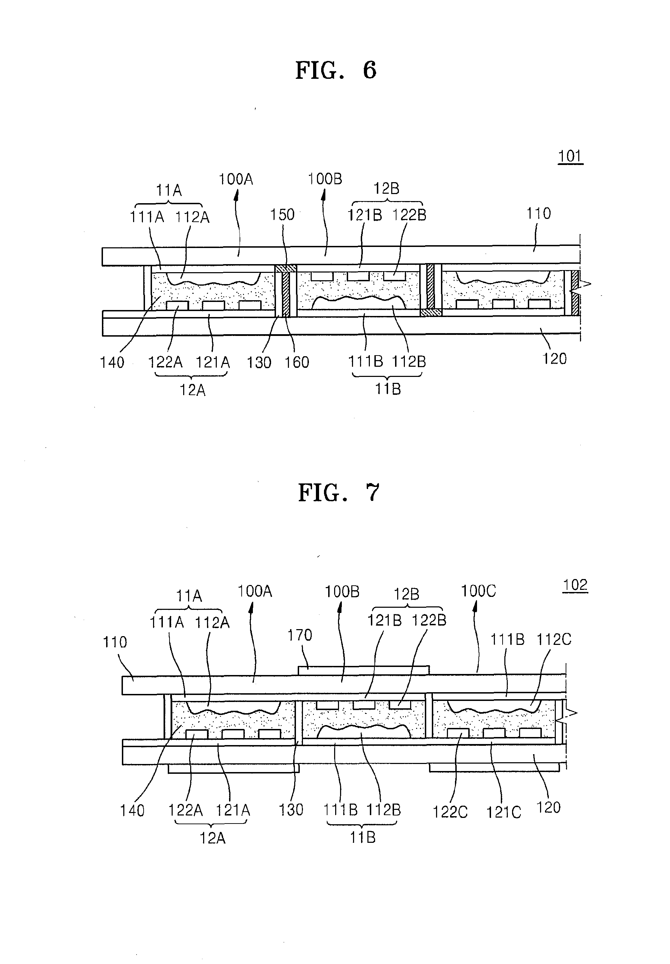

FIGS. 6 and 7 illustrate dye-sensitized solar cells 101 and 102, respectively, according to embodiments of the present invention. Referring to FIG. 6, a first unit cell 100A and a second unit cell 100B formed adjacent to the first unit cell 100A are separated from each other by a sealing material 130. An insulating material 160 may be formed inside the sealing material 130. A first conductive transparent electrode 111A of the first unit cell 100A and a second conductive transparent electrode 121B of the second unit cell 100B are formed adjacent to each other. The first conductive transparent electrode 111A and the second conductive transparent electrode 121B may be electrically connected to each other by a connection electrode 150. The connection electrode 150 may be formed of a high conductive material such as a conductive paste. Thus, the first conductive transparent electrode 111A of the first unit cell 100A may be electrically connected to the second conductive transparent electrode 121B of the second unit cell 100B. The first conductive transparent electrode 111A and the second conductive transparent electrode 121B may be alternately formed on a first substrate 110 or a second substrate 120.

Referring to FIG. 7, an ultra violet (UV) blocking layer 170 may be formed on an external surface of a first substrate 110 or a second substrate 120 so as to correspond to a plurality of second electrodes 122A, 122B, and 122C. For example, when light VL is incident on the plurality of second electrodes 122A, 122B, and 122C, a plurality of electrolytes 140 may be damaged due to UV rays. UV rays incident on a plurality of first electrodes 112A, 112B, and 112C may be absorbed into the first electrodes 112A, 112B, and 112C, and thus UV rays may not damage the dye and the electrolytes 140. However, since the second electrodes 122A, 122B, and 122C have a low UV ray absorbing property and include openings O, the second electrodes 122A, 122B, and 122C have low UV ray blocking properties. The UV blocking layer 170 formed of a transparent material or a partially transparent material may be formed to cover one or more of the second electrodes 122A, 122B, and 122C or to cover the first substrate 110 or to cover the entire second substrate 120.

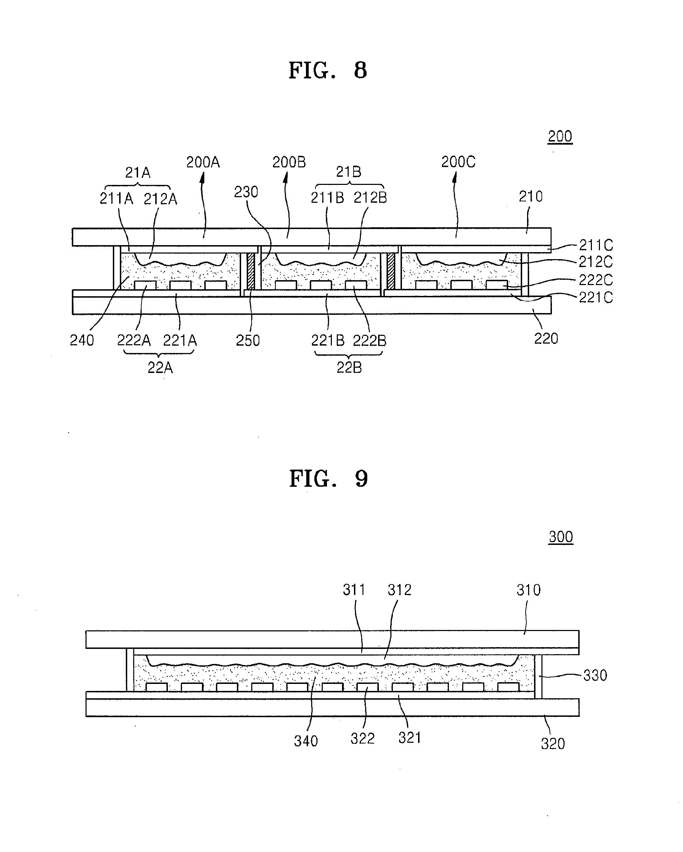

FIG. 8 is a schematic partial cross-sectional view illustrating a dye-sensitized solar cell, according to another embodiment of the present disclosure. In FIG. 8, a dye-sensitized solar cell 200 may have a Z-shaped module structure. That is, a plurality of unit cells 200A, 200B, and 200C may be formed so that same polarities thereof face a first substrate 210 or a second substrate 220. In this embodiment, different polarities of the unit cells 200A, 200B, and 200C disposed opposite to each other may be electrically connected in series by a plurality of connection electrodes 250. For example, a first conductive transparent electrode 211A of the first unit cell 200A and a second conductive transparent electrode 221B of the second unit cell 200B positioned adjacent to the first unit cell 200A may be electrically connected by one connection electrode 250. In this regard, a sealing material 230 may be disposed to cover each connection electrode 250. Although not shown in FIG. 8, the sealing material 230 may be covered by a sealing body (not shown). In this embodiment, the sealing material 230 and the sealing body may be formed as one body. Such a Z-shaped module structure may be used as a building integrated photovoltaic (BIPV) installed in a structure such as a window frame. At this time, the dye-sensitized solar cell 200 having the Z-shaped module structure may be used in products in which light is incident on only one surface, instead of products in which light is incident on opposite surfaces. In this case, a pattern is formed in a plurality of second electrodes 222A, 222B, and 222C, thereby increasing transparency and visibility of the dye-sensitized solar cell 200. For example, when the dye-sensitized solar cell 200 having the Z-shaped module structure is used in a window, solar light is directly incident only on one surface of the window and is not on the other side. Thus, an efficiency of a rear surface of the window does not need to be as high as the surface where light is incident. However, transparency of the window may be increased due to openings of the pattern formed in the second electrodes 222A, 222B, and 222C, thereby providing a high visibility to a user.

In FIGS. 2, 6, 7, and 8, the dye-sensitized solar cells 100, 101, 102, and 200 include the unit cells 100A, 100B, 100C, 200A, 200B, and 200C, but the present disclosure is not limited thereto. For example, referring to FIG. 9, a dye-sensitized solar cell 300 may include conductive transparent electrodes 311 and 321 between a first substrate 310 and a second substrate 320. A first electrode 312 and a second electrode 322 may be disposed on the conductive transparent electrodes 311 and 321, respectively. In addition, a sealing material 330 may seal an electrolyte 340. At this time, the second electrode 322 may include a pattern so as to have openings. Accordingly, the dye-sensitized solar cell 300 may be used in products in which light is to be incident on opposite surfaces. In addition, when the dye-sensitized solar cell 300 is used in products in which light is to be incident on a single surface, transparency and visibility of the dye-sensitized solar cell 300 may be increased. In FIGS. 8 and 9, a UV blocking layer is not illustrated, but the UV blocking layer may be formed on any one of the second electrodes 222A, 222B, 222C, and 322.

While this disclosure has been described in connection with what are presently considered to be practical exemplary embodiments, it will be appreciated by those skilled in the art that various modifications and changes may be made without departing from the scope of the present invention as defined by the claims. It will also be appreciated by those of skill in the art that parts of one embodiment are interchangeable with other embodiments; one or more parts from a depicted embodiment can be included with other depicted embodiments in any combination. For example, any of the various components described herein and/or depicted in the Figures may be combined, interchanged or excluded from other embodiments.

**Claims**

1. A dye-sensitized solar cell, comprising:

   a first substrate and a second substrate;
   a plurality of unit cells arranged between the first substrate and the second substrate, wherein each of the unit cells comprises first and second conductive transparent electrodes on respective internal surfaces of the first substrate and the second substrate;

a first electrode on the first conductive transparent electrode and comprising an oxide semiconductor layer comprising an adsorbed dye;

a second electrode on the second conductive transparent electrode opposite to the first electrode; and

an electrolyte disposed between the first electrode and the second electrode, wherein the second electrode comprises one or more openings.

2.  The dye-sensitized solar cell of claim 1, wherein an aperture ratio of the second electrode is equal to or less than about 50%.

3.  The dye-sensitized solar cell of claim 1 or 2, wherein the second electrode comprises a stripe pattern and a width of each of the stripes is equal to or less than about 500$\mu$m.

4.  The dye-sensitized solar cell of any one of the preceding claims, wherein the plurality of unit cells is electrically connected in series, and wherein adjacent unit cells are separated from each other by a sealing material.

5.  The dye-sensitized solar cell of claim 4, wherein first polarities and second polarities of the plurality of unit cells are alternately arranged with respect to the first substrate.

6.  The dye-sensitized solar cell of claim 5, further comprising a connection electrode for electrically connecting the first conductive transparent electrode of one unit cell and the second conductive transparent electrode of an adjacent unit cell.

7.  The dye-sensitized solar cell of claim 6, wherein the sealing material extends from the connection electrode to the first substrate or the second substrate positioned opposite to the connection electrode.

8.  The dye-sensitized solar cell of claim 7, wherein the sealing material comprises an insulating material.

9.  The dye-sensitized solar cell of claim 4, further comprising a connection electrode configured to electrically connect the first conductive transparent electrode of one unit cell and the second conductive transparent electrode of an adjacent unit cell.

10.  The dye-sensitized solar cell of claim 4, wherein the plurality of unit cells is arranged with respect to the first substrate so as to face the same direction.

11.  The dye-sensitized solar cell of claim 9, further comprising an insulating material covering the connection electrode.

12.  The dye-sensitized solar cell of claim 9, further comprising a sealing body disposed to cover the connection electrode.

13.  The dye-sensitized solar cell of any one of the preceding claims, further comprising a UV blocking layer on an external surface of the first substrate or the second substrate and corresponding to the second electrode.

14.  The dye-sensitized solar cell of claim 13, wherein the UV blocking layer comprises a partially transparent material.

15.  The dye-sensitized solar cell of any one of the preceding claims, wherein the second electrode comprises a carbon nanotube layer.

FIG. 1

# FIG. 2

FIG. 3

FIG. 4

# FIG. 5

TRANSMITTANCE %

EP 2 407 985 A2

# FIG. 6

# FIG. 7

FIG. 8

FIG. 9